Europäisches Patentamt

European Patent Office

Office européen des brevets

(11) Veröffentlichungsnummer: **0 047 892**
**A1**

(12) **EUROPÄISCHE PATENTANMELDUNG**

(21) Anmeldenummer: 81106662.0

(22) Anmeldetag: 27.08.81

(51) Int. Cl.³: **G 03 B 15/05**
**H 05 B 41/32**

(30) Priorität: 11.09.80 DE 3034146

(43) Veröffentlichungstag der Anmeldung:
24.03.82 Patentblatt 82/12

(84) Benannte Vertragsstaaten:
BE DE FR IT NL

(71) Anmelder: ROBERT BOSCH GMBH
Postfach 50
D-7000 Stuttgart 1(DE)

(72) Erfinder: Adler, Bernhard
Schwanenstrasse 4
D-6000 Frankfurt 1(DE)

(54) Elektronenblitzgerät mit automatischer Blitzlichtmengenbegrenzung.

(57) Es wird ein Elektronenblitzgerät mit automatischer Blitzlichtmengenbegrenzung vorgeschlagen, bei dem eine akustische Alarmeinrichtung vorgesehen ist, die dann ein Signal abgibt, wenn die im Elektronenblitzgerät gespeicherte Ladung ausreicht, ein solches Licht zu erzeugen, wie es für die richtige Belichtung eines in einer Kamera befindlichen Filmes erforderlich ist. Zu diesem Zwecke ist eine elektronische Schaltung zur Erzeugung des akustischen Warnsignals vorgesehen, wobei das Warnsignal dann ertönt, wenn die abgegebene maximale Lichtmenge zur Belichtung nicht ausgereicht hat.

FIG. 1

EP 0 047 892 A1

R. 7030 Fd

Elektronenblitzgerät mit automatischer Blitzlichtmengenbegrenzung

Die Erfindung betrifft ein Elektronenblitzgerät mit automatischer Blitzlichtmengenbegrenzung gemäß dem Oberbegriff des Patentanspruchs 1.

Aus der DE-AS 25 21 987 ist ein Elektronenblitzgerät mit automatischer Blitzlichtmengenbegrenzung bekannt, bei dem eine Blitzröhre in Reihe zu einem
ersten elektronischen Schalter geschaltet ist. Durch die Abgabe eines
Triggersignales mit nachfolgender Entladung eines parallel zu einer
Gleichstromversorgung geschalteten Hauptkondensators werden die Blitzröhre und der erste elektronische Schalter ausgelöst und damit das
Aufleuchten der Blitzröhre bewirkt. Weiterhin ist in dieser bekannten
Anordnung eine fotometrische Schaltung vorgesehen, die die von einem
Gegenstand reflektierte Lichtmenge mißt und bei Erreichen eines bestimmten Meßwertes ein Signal abgibt, mit dem ein zweiter elektronischer
Schalter in den leitenden Zustand gesteuert wird und die Entladung eines
in Reihe zu ihm geschalteten Schaltkondensators bewirkt, die das Abschalten des ersten elektronischen Schalters und damit das Erlöschen
der Blitzröhre zur Folge hat. Auf diese Weise wird nur ein Teil der im
Hauptkondensator des Blitzgerätes gespeicherten Energie in Abhängigkeit
von der Entfernung des Elektronenblitzgerätes zu einem Gegenstand in
Licht umgewandelt und der nicht mehr benötigte Rest der gespeicherten
Energie erhalten, so daß ein unnötiger Energieverlust der Gleichstrom-

...

versorgung verhindert werden kann. Bei dieser bekannten Anordnung ist zusätzliche eine Anzeigeeinrichtung vorgesehen, die ein akustisches und/oder optisches Signal abgibt, solange der Schaltkondensator wieder aufgeladen wird. Damit soll verhindert werden, daß die Blitzröhre gezündet wird, bevor der Schaltkondensator eine für die Löschung des Blitzröhrenstromes ausreichende Ladung aufweist, so daß der in Reihe zur Blitzröhre geschaltete erste elektronische Schalter durch Aufbringen eines ausreichenden,dem Blitzröhrenstrom entgegengerichteten Löschstromes, der die Unterschreitung des Haltestromes des ersten elektronischen Schalters bewirkt, nicht abgeschaltet wird. Dies hätte zur Folge, daß die automatische Steuerung der Lichtmenge nicht erhalten werden kann. Da die Blitzdauer im Bereich von Millisekunden liegt und damit zu kurz für die visuelle Feststellung ist, ob die automatische Steuerung der Lichtmenge mit Erfolg durchgeführt worden ist oder nicht, dient die akustische und/oder optische Anzeigeeinrichtung dazu, die automatische Belichtungssteuerung zu gewährleisten.

Aus der DE-AS 24 46 453 ist ein Elektronenblitzgerät mit automatischer Lichtdosierung bekannt, bei dem nach Erreichen einer vorprogrammierten Belichtung des Films der über eine Blitzlichtröhre führende Entladestromweg eines Speicherkondensators durch einen Thyristor sperrbar ist, in dem der Kathoden-Anoden-Strecke dieses Thyristors ein Sperrpotential aus einem Löschkondensator zugeführt wird. In den Ladestromweg des Löschkondensators ist eine Leuchtdiode eingefügt, die anzeigt, ob die vorprogrammierte Belichtung des Films erreicht worden ist oder nicht. Mit dem Aufleuchten der Leuchtdiode wird dem Benutzer des Elektronenblitzgerätes signalisiert, daß die vom Elektronenblitzgerät abgegebene Lichtleistung für eine richtig belichtete Aufnahme ausgereicht hat. Diese rein optische Kontrollanzeige hat den Nachteil, daß sie eine hohe Aufmerksamkeit vom Benutzer erfordert, die in der fotografischen Praxis zumeist nicht gegeben ist.

Aufgabe der vorliegenden Erfindung ist es, ein Elektronenblitzgerät mit automatischer Lichtmengenbegrenzung anzugeben, das eine nicht aus-

...

reichende Belichtung des Films in einer Weise anzeigt, die vom Benutzer des Elektronenblitzgerätes keine besondere Aufmerksamkeit abverlangt, d.h. auch unter schwierigen äußeren Bedingungen nicht übergangen werden kann. Zusätzlich soll die geforderte Anzeigeeinrichtung
stets funktionsfähig und mit einfachen, einen nur geringen zusätzlichen
Platzbedarf beanspruchenden Mitteln aufgebaut sein.

Diese Aufgabe wird erfindungsgemäß durch die kennzeichnenden Merkmale
des Patentanspruchs 1 gelöst.

Der mit der erfindungsgemäßen Lösung erzielbare Vorteil besteht insbesondere darin, daß dem Benutzer des Elektronenblitzgerätes nach erfolgter Aufnahme ein zuverlässiger Hinweis mittels eines akustischen
Fehlbelichtungssignals dann und nur dann gegeben wird, wenn die von
der Blitzröhre abgegebene Lichtmenge nicht ausgereicht hat. Durch
Änderung des Abstandes vom Aufnahmeobjekt ist er dann beispielsweise
in der Lage, die Aufnahme zu wiederholen. Das akustische Warnsignal verlangt vom Benutzer keine besondere Aufmerksamkeit, insbesondere kein
zusätzliches Beobachten einer Anzeigeeinrichtung nach erfolgter Belichtung des Films.

Vorteilhafte Ausgestaltungen der erfindungsgemäßen Lösung sind den
kennzeichnenden Merkmalen der Patentansprüche 2 bis 1o zu entnehmen.

Die Vorteile der Ausgestaltungen der erfindungsgemäßen Lösung bestehen
darin, daß die Erzeugung eines Intervalltones als akustisches Warnsignal
eine einfache Unterscheidung vom Geräusch des im Blitzgerät enthaltenen
Gleichstromwandlers ermöglicht. Die Schaltung zur Auslösung und Erzeugung
des akustischen Warnsignals zeichnet sich durch einen einfachen, zuverlässig arbeitenden und nur geringen Platz beanspruchenden Aufbau aus.
Das akustische Warnsignal soll immer dann ertönen, wenn die abgegebene
maximale Lichtmenge zur Belichtung nicht ausgereicht hat. In diesem
Zeitpunkt ist der Blitzkondensator entladen, der Gleichstromwandler
schaltet mit sehr niedriger Frequenz und die Versorgungsbatterie wird

...

sehr stark belastet. Insbesondere bei schwacher Batterie bricht die
Primärspannung des Gleichstromwandlers auf einen kleinen Wert zusammen.
Durch die kennzeichnenden Merkmale der Patentansprüche 9 und 1o ist die
zur einwandfreien Funktion der Schaltung notwendige Stromversorgung
auch für diesen bei Tätigwerden der Schaltung vorliegenden ungünstigen
Fall der Energiezufuhr sichergestellt.

Anhand eines in der Zeichnung dargestellten Ausführungsbeispieles soll der
der Erfindung zugrunde liegende Gedanke näher erläutert werden.

Es zeigen:

Fig. 1    ein Schaltbild eines Elektronenblitzgerätes,

Fig. 2    ein Blockschaltbild der erfindungsgemäßen Anordnung zur Erzeugung eines akustischen Warnsignals,

Fig. 3    ein detailliertes Schaltbild der Anordnung nach Fig. 2,

Fig. 4    eine zeitliche Darstellung der Signale gemäß der erfindungsgemäßen Anordnung und

Fig. 5    eine schematische Darstellung der Stromversorgung der erfindungsgemäßen Anordnung.

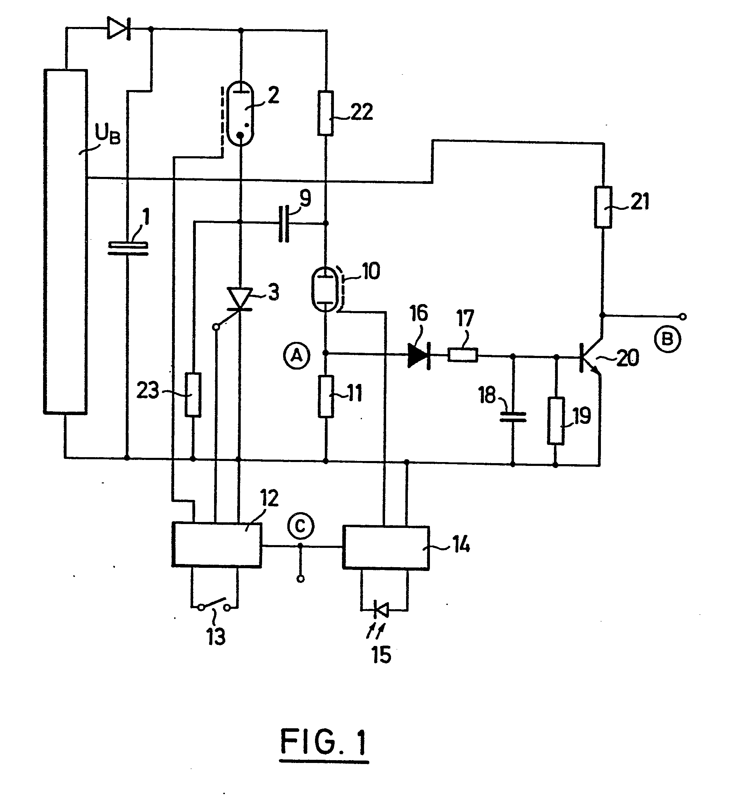

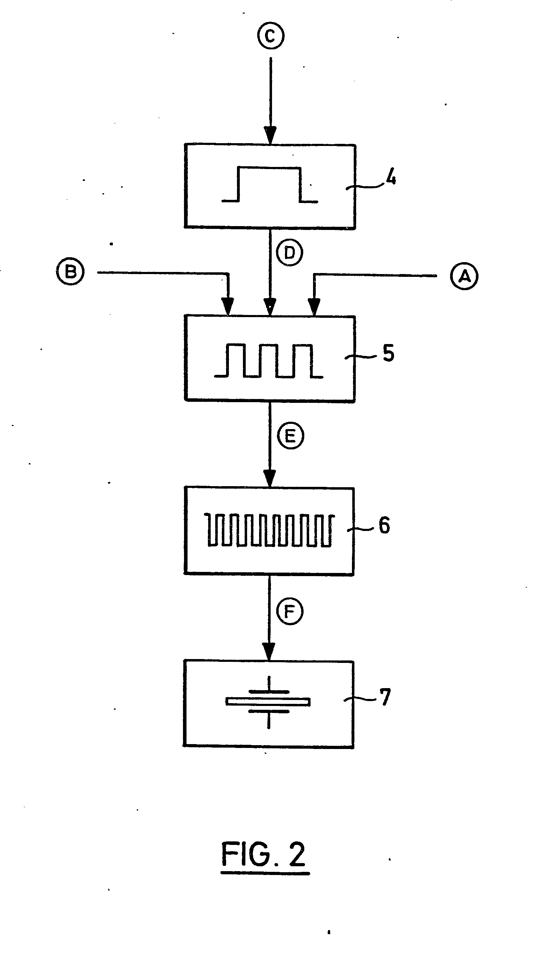

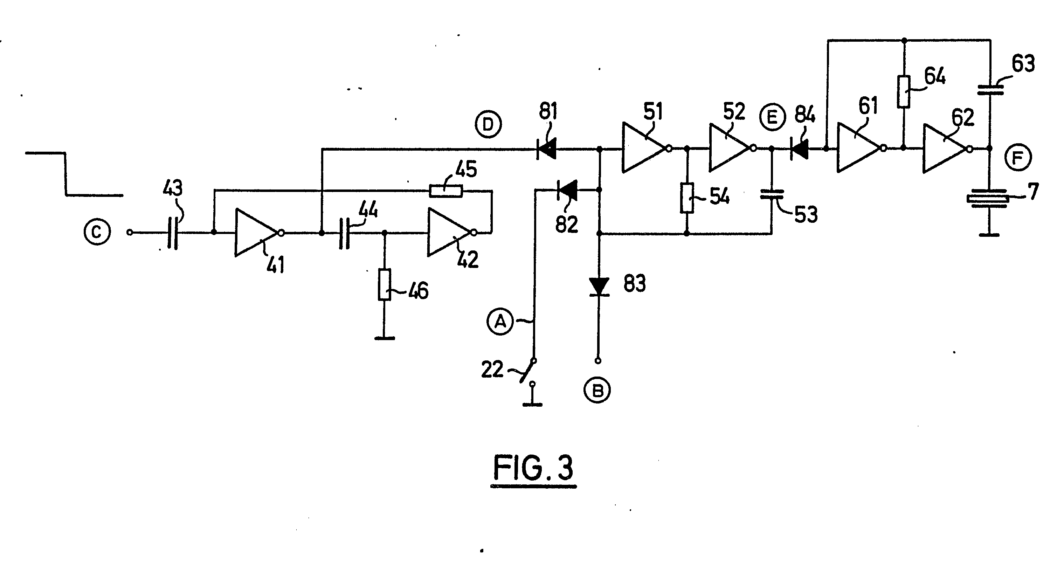

Das in Fig. 1 dargestellte Schaltbild eines Elektronenblitzgerätes zeigt
eine Gleichspannungsquelle $U_B$, der über ein nicht näher beziffertes
Gleichrichterelement ein Blitzkondensator 1 sowie die Reihenschaltung
einer Blitzröhre mit einem elektronischen Schalter 3 parallelgeschaltet sind. Die Trigger- oder Auslöseelektrode der Blitzröhre
2 sowie die Steuerelektrode des elektronischen Schalters 3 sind an
eine Triggerschaltung 12 zum Auslösen der Blitzröhre 2 bzw. Ansteuerung
des elektronischen Schalters 3 angeschlossen. Die Triggerschaltung 12
ist an einen Synchronkontakt 13 in der Kamera angeschlossen. Parallel
zur Anoden-Kathoden-Strecke des elektronischen Schalters ist die
Reihenschaltung eines Abschaltkondensators 9 einer Quenchröhre 1o sowie einer Drosselspule 11 angeordnet. Die Steuerelektrode der Quenchröhre 1o ist mit einer Blitzlichtmengenbegrenzungsschaltung 14 verbunden,

...

die ein lichtempfindliches Element 15 enthält. An die Verbindung der Quenchröhre 1o mit der Drosselspule 11 ist mit anodenseitigem Anschluß an diese Verbindung eine Diode 16 angeschlossen, die über einen Widerstand 17 mit der Basis eines Darlington-Transistors 2o verbunden ist. Parallel zur Basis-Emitter-Strecke des Darlington-Transistors ist die Parallelschaltung eines Steuerkondensators 18 und eines Widerstandes 19 geschaltet. Der Kollektor des Darlington-Transistors 2o ist über einen Widerstand 21 mit dem einen Pol der Spannungsquelle $U_B$ und der Emitter des Darlington-Transistors 2o mit dem anderen Pol der Spannungsquelle $U_B$ verbunden. Die in diesem Schaltbild eingetragenen Signale A, B, und C werden anhand der Darstellung der Fig. 2 und 3 näher erläutert. Die Funktionsweise dieses Schaltbildes wird nachstehend kurz erläutert:

Beim Einschalten des Elektronenblitzgerätes beginnt eine nicht näher dargestellte Gleichspannungsquelle, zum Beispiel ein von einer Batterie gespeister Gleichspannungswandler über die Diode den Blitzkondensator 1 und über die Widerstände 22 und 23 den Abschaltkondensator 9 auf die jeweilige Betriebsspannung aufzuladen. Beim Auslösen der mit dem Elektronenblitzgerät verbundenen Kamera wird deren Synchronkontakt 13 geschlossen, wodurch die Triggerschaltung 12 einen Zündimpuls gleichzeitig sowohl an die Steuerelektrode des elektronischen Schalters 3 als auch an die Trigger- oder Auslöseelektrode der Blitzröhre 2 legt. Dadurch kann sich der Blitzkondensator 1 über die Blitzröhre 2 entladen, die dann während der Dauer dieser Entladung Licht abstrahlt. Die Blitzlichtmengenbegrenzungsschaltung 14 mißt mittels des lichtempfindlichen Elementes 15 die vom Aufnahmeobjekt reflektierte Lichtmenge. Sobald die für eine richtige Belichtung ausreichende Lichtmenge erreicht ist, welche der richtigen Belichtung des Films in der Kamera entspricht, wird die Quenchröhre 1o durch einen Impuls aus der Blitzlichtmengenbegrenzungsschaltung 14 gezündet, so daß der Abschaltkondensator 9 über die Quenchröhre 1o die Drosselspule 11 und den elektronischen Schalter 3 entladen wird. Diese Entladung bewirkt einen gegen den Blitzröhrenstrom gerichteten Löschstrom, was zur Unterschreitung des Haltestromes des elektronischen Schalters 3 führt und diesen in den

...

nichtleitenden Zustand versetzt. Damit ist die Blitzentladung beendet. Während dieses Vorganges tritt an der Drosselspule 11 ein Spannungsabfall auf, der über die Diode 16 und den Widerstand 7 dem Steuerkondensator zugeführt wird, der sich sehr schnell auflädt. Die ansteigende Basis-Emitter-Spannung am Darlington-Transistor 2o führt den Transistor in den leitenden Zustand, der solange anhält, bis sich der Steuerkondensator 18 über den Widerstand 19 und die parallel zum Widerstand 19 geschaltete Basis-Emitter-Strecke des Darlington-Transistors 2o entladen hat. Im leitenden Zustand ist der Kollektor des Darlington-Transistors 2o bis auf einen geringen Spannungsabfall auf Massepotential heruntergezogen, d.h. bei Tätigwerden der Lichtmengenbegrenzungsschaltung und damit bei Leitendwerden des Darlington-Transistors 2o geht das am Kollektor des Darlington-Transistors 2o abgegriffene Signal B nahezu auf Null zurück. Das Signal C wird von der Triggerschaltung 12 gebildet und befindet sich im H-Zustand vom Auslösemoment des Blitzes an bis zur vollständigen Beendigung der Blitzentladung. Schließlich wird ein Signal A an der Verbindung der Quenchröhre 1o mit der Drosselspule 11 abgegriffen.

Das in Fig. 2 dargestellte Blockschaltbild zeigt eine monostabile Kippstufe 4, die von dem von der Triggerschaltung 12 abgegebenen Signal C getriggert wird. Das Ausgangssignal D der monostabilen Kippstufe wird zusammen mit den beiden in der vorstehend beschriebenen Schaltung erläuterten Signalen A einem ersten Oszillator 5 zugeführt, der mit niedriger Frequenz von beispielsweise 6 Hz schwingt. Das Ausgangssignal E dieses ersten Oszillators 5 ist an den Eingang eines nachgeschalteten zweiten Oszillators angeschlossen, der mit wesentlich höherer Frequenz von beispielsweise 2 kHz schwingt. Schließlich ist der Ausgang des zweiten Oszillators 6 mit dem Ausgangssignal F mit einem elektro-akustischen Wandler 7 verbunden.

Mit der Ansteuerung der die Gesamtdauer des Warnsignals bestimmenden monostabilen Kippstufe 4 wird der Eingang des ersten Oszillators 5 aktiviert, der bei Vorliegen der beiden zusätzliche Signale A und B den

...

-7-

zweiten Oszillator 6 abwechselnd ein- und ausschaltet. Die Schwingungen
des zweiten mit höherer Frequenz schwingenden Oszillators 6 werden
dem elektro-akustischen Wandler 7 zugeführt, der die Schwingungen des
zweiten Oszillators hörbar macht.

Das in Fig. 3 dargestellte detaillierte Schaltbild der erfindungsgemäßen Schaltung zur Erzeugung eines akustischen Warnsignals enthält
eine aus den CMOS-Invertern 41 und 42 gebildete monostabile Kippstufe
in der die Kondensator-Widerstands-Kombinationen 43, 45 und 44, 46 die
zeitbestimmenden Elemente sind. Getriggert wird die monostabile Kippstufe entsprechend der Darstellung im Blockschaltbild 2 mit dem Signal
C am Eingang der monostabilen Kippstufe durch die abfallende Flanke
dieses von der Triggerschaltung 12 abgegebenen Signals. Im aktiven Zustand der monostabilen Kippstufe wird der Ausgang mit dem Ausgangssignal D für eine bestimmte Zeit in den H-Zustand versetzt, d.h. der Ausgang der monostabilen Kippstufe nimmt das Potential der Versorgungsspannung an. Über eine erste Diode 81 wird dieses Signal D dem ersten
Oszillator zugeführt. Beide Oszillatoren bestehen aus CMOS-Invertern
51, 52 bzw. 61, 62. Frequenzbestimmende Glieder sind hier die Widerstands-Kondensator-Kombinationen mit den Widerständen 54 bzw. 64 und
den Kondensatoren 53 bzw. 63. Die Widerstände 54 bzw. 64 sowie die
Kondensatoren 53 bzw. 63 sind parallel zum jeweils zweiten Inverter
52 bzw. 62 geschaltet. Die Verbindung der Widerstände 54 bzw. 64 mit
den Kondensatoren 53 bzw. 63 ist an den Eingang des jeweils ersten Inverters 51 bzw. 61 angeschlossen. Am Ausgang des ersten Oszillators erscheinen Ausgangssignale E nur dann, wenn alle an den Eingang des
ersten Inverters 51 gelegten Eingangssignale A, B und D im H-Zustand
oder offen sind. Dabei werden die gemäß dem Schaltbild 1 an der Verbindung der Quenchröhre 1o mit der Drosselspule 11 bzw. am Kollektor
des Darlington-Transistors 2o abgegriffenen Singale A und B über jeweils
eine Diode 82 bzw. 83 an den Eingang des ersten Inverters 51 gelegt.
Alle Dioden 81 bis 83 sind anodenseitig mit dem Eingang des ersten Inverters 51 verbunden. Die Kathode der zweiten Diode 82 ist zusätzlich

...

über einen Schalter 22 mit Massepotential verbunden. Dieser Schalter 22 dient der Stillegung der gesamten Anordnung. Im Ruhezustand der gesamten Anordnung ist der Ausgang des ersten Oszillators mit dem Ausgangssignal E im L-Zustand bzw. auf Nullpotential.

Der aus den Invertern 61 und 62 sowie den frequenzbestimmenden Elementen 63 und 64 bestehende zweite Oszillator kann nur dann schwingen, wenn das über eine vierte Diode 84 an den Eingang des ersten Inverters gelegte Eingangssignal E im H-Zustand ist. Der Ausgang des zweiten Inverters 62 mit dem Ausgangssignal F steuert einen elektro-akustischen Wandler an, der mit dem Ausgang des zweiten Inverters 62 einerseits und mit Massepotential andererseites verbunden ist.

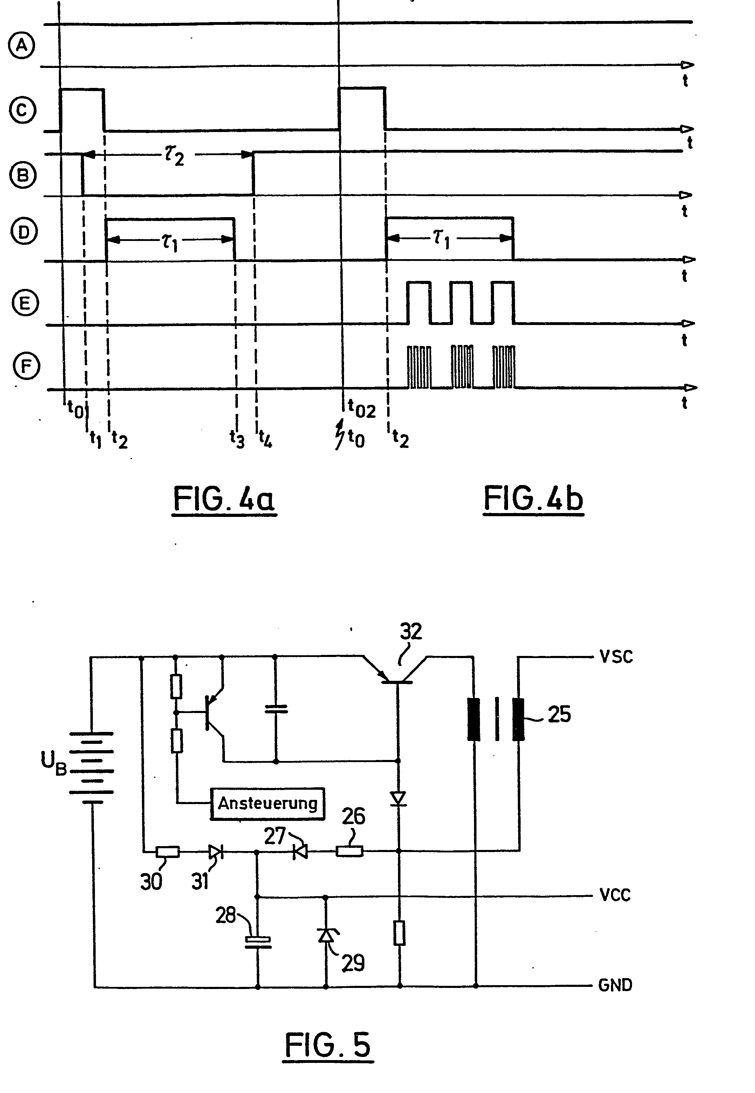

Anhand der zeitlichen Darstellung der einzelnen Signale gemäß Fig. 4 soll die Funktion der erfindungsgemäßen Anordnung näher erläutert werden:

Das an der Verbindung der Quench-Röhre mit der Drosselspule 11 abgegriffene Signal A ist für die Dauer der hier betrachteten Vorgänge annähernd konstant. Das von der Triggerschaltung 12 gebildete Signal C ist vom Auslösemoment des Blitzes (Zeitpunkt $t_o$) bis zur vollständigen Beendigung der Blitzentladung (Zeitpunkt $t_2$) im H-Zustand. Die abfallende Flanke, d.h. das Verschwinden dieses Signals triggert die monostabile Kippstufe 4, die eine Zeitkonstante $\tau 1$ aufweist. Diese Zeitkonstante $\tau 1$, die im hier dargestellten Zeitdiagramm bis zum Zeitpunkt $t_3$ dauert ist wesentlich kleiner als die Zeitkonstante $\tau 2$, die die Zeitdauer des Leitzustandes des Darlington-Transistors 20 repräsentiert und vom Zeitpunkt $t_1$ bis zum Zeitpunkt $t_4$ andauert. Wird die Entladung der Blitzröhre 2 vorzeitig unterbrochen, d.h. war die Lichtmenge für eine korrekte Belichtung des Filmes ausreichend, so wird die im Schaltbild zu Fig. 1 erläuterte Schaltung zur Ansteuerung des Darlington-Transistors 20 aktiviert und der Kollektor des Darlington-Transistors 20 wird - wie beschrieben - auf Nullpotential herabgezogen. In diesem Zustand verbleibt der Kollektor des Darlington-Transistors 20 und damit das Signal B für die Zeit $\tau 2$. Da die Zeitdauer $\tau 2$ wesentlich größer als die Zeitdauer $\tau 1$ sein soll, kann der erste Oszillator nicht aktiv

...

werden, so daß kein akustisches Signal ertönt (Fig. 4a).

Für den Fall einer nicht ausreichenden Lichtmenge zur korrekten Ausleuchtung des Aufnahmeobjektes und damit zur korrekten Belichtung des
Filmes wird mit der abfallenden Flanke des Signals C die monostabile
Kippstufe getriggert und durch das gleichzeitige Vorhandensein der Signale A und B der erste Oszillator aktiviert (Signal E). Damit wird aber
auch abwechselnd der zweite Oszillator aktiviert und es ertönt das
intervallmäßig auftretende Warnsignal (Signal F). Während also in der
zeitlichen Darstellung der einzelnen Signale gemäß Fig. 4a infolge
des Wirksamwerdens der Abschalteinrichtung das Signal B in den L-Zustand
geführt wird und damit die beiden Oszillatoren nicht aktiviert werden
können, ist gemäß der Darstellung nach Fig. 4b keine Abschaltung erfolgt,
so daß das Signal B während der gesamten Zeitdauer im H-Zustand war und
damit mit der abfallenden Flanke des Signals C und der daraus resultierenden gleichzeitigen Ansteuerung der monostabilen Kippstufe die
Oszillatoren zur Erzeugung des Warnsignals ausgelöst werden.

Die in Fig. 5 gezeigte schematische Darstellung der Stromversorgung für
die erfindungsgemäße Anordnung enthält einen aus einem Transistor 32
und einem Übertrager 25 sowie weiteren nicht näher bezifferten Elementen
bestehenden Gleichspannungswandler, der die aus einer Batterie $U_B$ zugeführte Spannung in eine höhere Spannung $V_{SC}$ umwandelt. Zur Sicherstellung
der Betriebsspannung für das akustische Warnsignal wird aus der Rückschlagspannung des Wandler-Übertragers 25 über den Widerstand 26 und die
Diode 27 ein Kondensator 28 aufgeladen. Die positive Elektrode dieses
Kondensators 28 ist zusätzlich über eine weitere Diode 31 und einen
weiteren Widerstand 3o mit dem positiven Pol der Batterie $U_B$ verbunden.
Parallel zum Kondensator 28 ist zur Spannungsbegrenzung eine Z-Diode 29
geschaltet. An der positiven Elektrode des Kondensators 28 wird die
Versorgungsspannung für die erfindungsgemäße Anordnung $V_{cc}$ abgegriffen.

R. 7030      Fd

Patentansprüche

1. Elektronenblitzgerät mit automatischer Blitzlichtmengenbegrenzung,
   das eine Blitzlichtmengenbegrenzungsschaltung und die Reihenschaltung
   einer Blitzröhre mit einem elektronischen Schalter enthält, wobei
   die Blitzröhre durch Abgabe eines Triggersignals an die Blitzröhre
   und den elektronischen Schalter mit nachfolgender Entladung eines
   aus einer Gleichspannungsquelle aufgeladenen Blitzkondensators gezündet wird und wobei die Blitzlichtmengenbegrenzungsschaltung die
   von einem Aufnahmeobjektiv reflektierte Lichtmenge mißt und die
   Zündung der Blitzröhre durch Abgabe eines Abschaltsignals mit nachfolgender Unterbrechung des Stromflusses durch den elektronischen
   Schalter beendet, dadurch gekennzeichnet, daß eine nicht ausreichende
   Belichtung des Aufnahmeobjektes erfaßt und ein akustisches Warnsignal
   ausgelöst wird.

2. Elektronenblitzgerät nach Anspruch 1, dadurch gekennzeichnet, daß
   das akustische Warnsignal aus einem Intervallton besteht.

3. Elektronenblitzgerät nach den Ansprüchen 1 und 2, dadurch gekennzeichnet, daß mit der abfallenden Flanke eines von der Auslösung der
   Blitzröhre (2) bis zur vollständigen Beendigung der Blitzentladung bestehenden Signals (C) eine monostabile Kippstufe (4) mit einer ersten
   Zeitkonstanten ( 1) getriggert wird, daß das Ausgangssignal (D) der
   monostabilen Kippstufe (4) zusammen mit dem Abschaltsignal (A) und
   einem Computer-Kontrollsignal (B) mit einer zweiten Zeitkonstanten
   ($\tau 2 > \tau 1$) einem ersten mit niedriger Frequenz schwingenden Oszillator

...

(5) und daß das Ausgangssignal (E) des ersten Oszillators (5) einem
zweiten, mit höherer Frequenz schwingenden Oszillator (6) und dessen
Ausgangssignal (F) einem elektro-akustischen Wandler (7) zugeführt
wird.

4. Elektronenblitzgerät nach den Ansprüchen 1 - 3, <u>dadurch gekennzeichnet,</u>
daß das Abschaltsignal (A) an der Verbindung einer Quenchröhre (1o)
mit einer Drosselspule (11) abgegriffen wird, die in Reihe mit einem
Abschaltkondensator (9) parallel zum elektronischen Schalter (3) geschaltet sind, wobei das Steuergitter der Quenchröhre (1o) mit der
Blitzlichtmengenbegrenzungsschaltung (14) verbunden ist.

5. Elektronenblitzgerät nach den Ansprüchen 1 bis 3, <u>dadurch gekennzeichnet,</u> daß das Computer-Kontrollsignal (B) am Kollektor eines Darlington-
Transistors (2o) abgegriffen wird, dessen Basis über die Reihenschaltung einer Diode (16) mit einem Widerstand (17) an die Verbindung der
Quenchröhre (1o) mit der Drosselspule (11) angeschlossen ist und parallel zu dessen Basis-Emitter-Strecke die Parallelschaltung eines
Steuerkondensators (18) mit einem Widerstand (19) geschaltet ist.

6. Elektronenblitzgerät nach Anspruch 3, <u>dadurch gekennzeichnet,</u> daß
die monostabile Kippstufe (4) aus zwei Invertern (41, 42) gebildet
wird, denen als zeitbestimmende Elemente Widerstands-Kondensator-
Kombinationen in der Weise zugeordnet sind, daß der Eingang des
ersten Inverters (41) sowohl über einen ersten Kondensator (43) mit
dem Signal (C) beaufschlagt wird als auch über einen ersten Widerstand (45) mit dem Ausgang des zweiten Inverters (42) verbunden ist
und daß der Eingang des zweiten Inverters (42) über einen zweiten
Kondensator (44) mit dem Ausgang des ersten Inverters (41) und über
einen zweiten Widerstand (46) mit Masse- oder Bezugspotential verbunden ist.

7. Elektronenblitzgerät nach Anspruch 3, <u>dadurch gekennzeichnet,</u> daß
die Oszillatoren (5, 6) aus jeweils zwei Invertern (51, 52; 61, 62)

...

bestehen, wobei dem jeweils zweiten Inverter (52, 62) die Reihenschaltung eines Kondensators (53, 63) und eines Widerstandes (54, 64)
parallelgeschaltet und die Verbindung von Kondensator (53, 63) und
Widerstand (54, 64) mit dem Eingang des jeweils ersten Inverters (51,
61) verbunden ist.

8. Elektronenblitzgerät nach den Ansprüchen 3, 6 und 7, dadurch gekennzeichnet, daß der Eingang des ersten Inverters (51) des ersten
Oszillators (5) über Dioden (81, 82, 83) mit anodenseitigem Anschluß
am Eingang des Inverters (51) mit dem Ausgang des ersten Inverters (41)
der monostabilen Kippstufe (4) (Signal D), der Verbindung der Quench-
Röhre (1o) und der Drosselspule (11) (Signal A) sowie dem Kollektor
des Darlington-Transistors (2o) (Signal B) verbunden ist.

9. Elektronenblitzgerät nach den Ansprüchen 1 bis 3, dadurch gekennzeichnet, daß die Spannungsversorgung für die Schaltung zur Erzeugung des
akustischen Warnsignals aus der Rückschlagspannung eines in der
Spannungs-Versorgungsschaltung des Elektronenblitzgerätes vorhandenen
Gleichspannungswandler-Übertragers (25) gewonnen wird.

1o. Elektronenblitzgerät nach Anspruch 9, dadurch gekennzeichnet, daß die
Sekundärwicklung des Übertragers (25) über die Reihenschaltung eines
Widerstandes (26) und einer Diode (27) mit einem Kondensator (28) mit
parallelgeschalteter Z-Diode (29) verbunden ist und daß die Versorgungsspannung für die Schaltung zur Erzeugung des akustischen Warnsignals am Kondensator (28) abgegriffen wird.

11. Elektronenblitzgerät nach den Ansprüchen 3-8, dadurch gekennzeichnet,
daß die Oszillatoren (5, 6) und die Kippstufe (4) aus NANO- und/oder
NOR-Gattern gebildet sind und die freien Gattereingänge zum Ein- und
Ausschalten des betreffenden Oszillators (5, 6) bzw. der Kippstufe
(4) ohne die Diodenverknüpfungen dienen.

...

0047892

¼

**FIG. 1**

FIG. 2

FIG.3

0047892

FIG.4a        FIG.4b

FIG. 5

Europäisches
Patentamt

## EUROPÄISCHER RECHERCHENBERICHT

| | EINSCHLÄGIGE DOKUMENTE | | KLASSIFIKATION DER ANMELDUNG (Int. Cl ³) |
|---|---|---|---|
| Kategorie | Kennzeichnung des Dokuments mit Angabe, soweit erforderlich, der maßgeblichen Teile | betrifft Anspruch | |
| | <u>GB - A - 2 024 451</u> (WEST ELECTRIC CO.) <br> * Seite 2, Zeile 57 bis Seite 3, Zeile 26 ; Seite 3, Zeile 48 bis Seite 4, Ziele 7, Patentanspruch 1, Abbildungen 1,2,3 * <br><br> -- | 1-3,7, 11 | G 03 B 15/05 <br> H 05 B 41/32 |
| | PATENTS ABSTRACTS OF JAPAN, vol. 4, no. 115, August 16, 1980, P-23, 597 <br> & JP - A - 55 69133 (WEST DENKI) <br> * Ganze Zusammenfassung * <br><br> -- | 3,6,7, 11 | |
| A | <u>FR - A - 2 143 026</u> (BRAUN) <br> * Abbildung * <br><br> -- | 4 | **RECHERCHIERTE SACHGEBIETE (Int. Cl.³)** <br><br> G 03 B 15/05 <br> 17/18 <br> H 05 B 41/32 |
| A | <u>FR - A - 2 136 493</u> (ASANI KOGAKU KOGYO) <br> * Seite 9, Zeile 30 bis Seite 10, Zeile 7 * <br><br> -- | 5 | |
| A | <u>US - A - 3 898 514</u> (TAKAHASHI) <br> * Patentansprüche 1 und 4 * <br> & DE - A - 2 327 681 <br><br> ---- | 9 | **KATEGORIE DER GENANNTEN DOKUMENTE** <br><br> X: von besonderer Bedeutung allein betrachtet <br> Y: von besonderer Bedeutung in Verbindung mit einer anderen Veröffentlichung derselben Kategorie <br> A: technologischer Hintergrund <br> O: nichtschriftliche Offenbarung <br> P: Zwischenliteratur <br> T: der Erfindung zugrunde liegende Theorien oder Grundsätze <br> E: älteres Patentdokument, das jedoch erst am oder nach dem Anmeldedatum veröffentlicht worden ist <br> D: in der Anmeldung angeführtes Dokument <br> L: aus andern Gründen angeführtes Dokument <br><br> &: Mitglied der gleichen Patentfamilie, übereinstimmendes Dokument |
| | Der vorliegende Recherchenbericht wurde für alle Patentansprüche erstellt. | | |

| Recherchenort | Abschlußdatum der Recherche | Prüfer |
|---|---|---|
| Den Haag | 22-12-1981 | MEES |

EPA form 1503.1  06.78